(19) Europäisches Patentamt
European Patent Office
Office européen des brevets

(11) EP 1 923 793 A2

(12) **EUROPEAN PATENT APPLICATION**

(43) Date of publication:
21.05.2008 Bulletin 2008/21

(51) Int Cl.:
*G06F 13/16* (2006.01)    *G06F 12/08* (2006.01)

(21) Application number: 07117314.0

(22) Date of filing: 27.09.2007

(84) Designated Contracting States:
**AT BE BG CH CY CZ DE DK EE ES FI FR GB GR
HU IE IS IT LI LT LU LV MC MT NL PL PT RO SE
SI SK TR**
Designated Extension States:
**AL BA HR MK RS**

(30) Priority: **03.10.2006 RU 2006134919
16.08.2007 US 840000**

(71) Applicant: **Sparsix Corporation
San Francisco, CA 94127 (US)**

(72) Inventors:
• **Diyankov, Oleg Vladimirovich**
**142190, Troitsk (RU)**
• **Konotop, Yuri Ivanovich**
**456770, Snezhinsk (RU)**
• **Batson, John Victor**
**Loganville, GA 30052 (US)**

(74) Representative: **Reichert, Werner Franz
Reichert & Benninger
Bismarckplatz 8
93047 Regensburg (DE)**

(54) **Memory controller for sparse data computation system and method therefor**

(57)    An accelerator system supplements standard computer memory management units specifically in the case of sparse data. The accelerator processes requests for data from an analysis application running on the processor system by pre-fetching a subset of the irregularly ordered data and forming that data into a dense, sequentially-ordered array, which is then placed directly into the processor's main memory, for example. In one example, the memory controller is implemented as a separate, add-on coprocessor so that actions of the memory controller will take place simultaneously with the calculations of the processor system. This system addresses the problems caused by a lack of sequential and spatial locality in sparse data. In effect, the complicated data access characteristic of irregular structures, which are a characteristic of sparse matrices, is transferred from the code level to the hardware level.

Fig. 1

**Description**

The increasing computational power available from general purpose, industry standards-based computers (PCs, workstations and servers) has led to a continuing shift away from traditional supercomputers for many computationally intensive applications. Examples include applied engineering and scientific problems.

One specific example concerns the analysis of large sparse linear systems. Essentially, sparse data are a matrix of data elements in which most of the elements are null, or have a zero value, and the remaining, non-zero elements are populated throughout the matrix in an irregular fashion. Forms of sparse data are encountered in many application areas including data mining, internet searching and page-rank computation, but it is the area of physical simulation, which refers to simulating real-world, physical processes in a virtual environment (such as structural analysis, crash testing and fluid dynamics), where sparse data present one of the greatest challenges.

One of the reasons that physical simulation presents such a challenge is the potentially enormous size of the sparse data sets. Numerical methods for compressing sparse data into dense data by removing the null elements have existed for some time. The primary problem for computer numerical analysis lies in handling the irregular nature of the remaining non-zero elements. Modem computer architectures assume that most data have a high degree of sequential and spatial locality - in other words, that data are ordered in a sequential fashion and that once a program accesses a particular data element there is a high likelihood that the neighboring data elements (those 'spatially' close) will be accessed soon.

When solving such systems on standard computing platforms, the performance increases possible from careful optimization of the application code are often limited by the complexity of the data structures (sparse matrices with irregular data structure) and the data access methods used. As a result the performance of the entire computing system is determined by the bandwidth of the memory subsystem.

It is well known that the application of high-end, multiprocessor computing servers, in a combination with effective techniques of parallelizing, allows many computationally-intensive problems to be solved on a timely basis. The use of multiprocessor systems, however, does not generally result in the expected performance increase for the problems of sparse matrices since the critical resource, the memory subsystem, is shared between processors. Additionally, parallelizing this class of problems on network clusters often does not give the needed efficiency increase for solving large sparse linear systems in comparison with the solution on one computer because of the inherent iterative nature of the algorithms and insufficient channel capacity provided by the networked environment.

Because the architectures of the memory systems implicitly assume sequential and spatial locality of data, most common computer systems encounter dramatic decreases in performance when dealing with sparse data. Although faster memory components and bus speeds might help improve memory performance, these solutions do not address the fundamental problem: general-purpose computers are not designed to handle sparse data. In short, no matter how powerful the processor(s), too much time is spent waiting for the memory subsystem to provide the next data point to continue the calculations,

The present invention can be used to address problems such as a lack of sequential and spatial locality in data. In effect, the complicated data access of irregular structures, which is characteristic of problems involving sparse matrices, is transferred from the code level to the hardware. The invention utilizes an accelerator system that can supplement standard computer memory controllers specifically in the case of sparse data. The controller handles requests for data from an analysis application running on the processor system by pre-fetching a subset of the irregular data and forming that data into a dense, sequentially-ordered array, which is then placed directly into the processor's main memory, for example. In one example, the memory controller is implemented as a separate, add-on co-processor so that actions of the memory controller will take place simultaneously with the calculations of the processor system.

The combination of simultaneous processing and intelligent memory management can dramatically increase overall system performance.

In general, according to one aspect, the invention features a method for providing data to a processor system using a memory controller. This method comprises the memory controller receiving data calls from the processor system and then having the memory controller locate the data corresponding to the data calls. The memory controller accesses these data and reorders them. Then, the memory controller passes the reordered data to the processor system, which then operates on the reordered data.

In the preferred embodiment, the method comprises an initialization step in which the memory controller loads the dense data (non-zero data), being matrix array and/or vector array data and an index for the dense data, from a main memory of the processor system into a local memory of the memory controller.

In the preferred embodiment, the memory calls are pre-fetch data requests generated by the processor system, and the step of locating the data comprises accessing the data based on the index that indicates the location of specific, non-zero data elements within the dense data.

In the preferred embodiment, the step of accessing and reordering the data comprises re-sequencing the data originally retrieved from the memory of the processor system. Specifically, the data are reordered so that they may be efficiently retrieved from rows of a cache memory of the processor system by changing spatial positions of the data in the memory and re-sequencing the data to be contiguous. The data are then typically loaded into the main memory of the processor system and then the processor system loads the data from the main memory into the processor cache.

In general, according to another aspect, the invention features an accelerator system for a computer system. This accelerator system comprises a local memory and a memory controller that receives data calls from a processor system, locates data corresponding to the data calls in the local memory, accesses and reorders the data and then passes the reordered data to the processor system. The processor system then operates on the reordered data.

In the preferred embodiment, this local memory is loaded with a dense matrix array and/or vector array data and an index for the dense data. The data are loaded from the main memory of the processor system into this local memory of the accelerator system.

The above and other features of the invention including various novel details of construction and combinations of parts, and other advantages, will now be more particularly described with reference to the accompanying drawings and pointed out in the claims. It will be understood that the particular method and device embodying the invention are shown by way of illustration and not as a limitation of the invention. The principles and features of this invention may be employed in various and numerous embodiments without departing from the scope of the invention.

In the accompanying drawings, reference characters refer to the same parts throughout the different views. The drawings are not necessarily to scale; emphasis has instead been placed upon illustrating the principles of the invention. Of the drawings:

Fig. 1 is a schematic block diagram showing a computer system with an accelerator system according to the present invention;

Fig. 2 is a flow diagram illustrating the operation of the inventive accelerator system; and

Figs. 3 and 4 are timing diagrams comparing the operation of a typical computer system to an operation of a computer system having a memory controller according to the present invention.

Example Sparse Matrix-Vector Product Algorithm

In a sparse matrix almost all of the elements are null, or have a zero value. In order to minimize computer memory requirements, special storage schemes have been developed for compressing sparse matrices into "dense" matrices. The primary objective of these schemes is to store only the non-zero elements of the matrix while still allowing mathematical operations to be performed on the matrix. One commonly used storage scheme is the so-called Compressed Row Storage (CRS) format. Other examples include CCS - Compressed Column Storage, CDS - Compressed Diagonal Storage, and JDS - Jagged Diagonal Storage.

When a sparse matrix is stored in the CRS format it has the following three different dense matrices or, in computer terminology, arrays:

1. A real array, W, which contains all the real (or complex) values of the non-zero elements of the sparse matrix $a_{ij}$ stored row by row, from row 1 to n. The length of W is Nz. (In this example, Nz denotes the total number of non-zero elements.)

2. An integer array, ColInd, that contains the column indices of the elements of sparse matrix $a_{ij}$ stored in the array W. The length of ColInd is Nz.

3. An integer array, RowPtr, which contains the pointers to the beginning of each row in the arrays W and ColInd. Thus, the content of RowPtr[i] is the position in arrays W and ColInd where the i-th row starts. The length of RowPtr is n+1 with RowPtr[n+1] containing the number Nz.

The software algorithm for the sparse matrix-vector product (MVP) calculation itself is rather simple. In one example, for a matrix in CRS format, the C/C++ notation can be written as follows:

fbr(i=0; i<N;i++) {

Result[i]=0.0;

for( j = RowPtr[i]; j < RowPtr[i+1]; j ++) {

Result[i] += W[j] * X[ ColInd[j] ];

}

}

Basically, this short piece of code starts a loop that multiplies the non-zero values in array W by the values in vector X one row at a time. One might naturally assume that the actual computation of W * X would account for the majority of computation time, but the most time-consuming operation in the algorithm actually is accessing the elements of the dense vector X through the operation X[ ColInd[j] ].

The reason for this performance bottleneck is that even though the sparse matrix data have been compressed to remove the zero-value elements, the elements of X are retrieved in a non-sequential fashion. For example, envision two neighboring (connected) elements in a finite element mesh. Although they may be spatially close to each other in a real-world three dimensional object, when stored in a computer memory array, elements on different layers of the mesh will often have very different location indices. When the computer tries to fetch a subset of related elements for a specific calculation, their values can be located throughout the entire matrix. This irregularity, referred to as poor sequential locality, forces the computer's memory management unit to access the data in a quasi-random fashion, which in turn creates a cascade of potentially significant delays and a severe impact on overall system performance.

It should be noted that this code sample shows one possible software method for accessing the data from dense vector X. This method, commonly referred to as indirect addressing, fetches one element of X at a time and then performs the operation (multiplication in this case) on that element, after which the loop continues and the next element of X is fetched.

Another software method, commonly referred to as scatter/gather, provides for all associated or required elements of X for a specific calculation to be pre-fetched or gathered in advance into a temporary array. After pre-fetching all required elements, the calculations are performed and the results are "scattered" back into the results array in their correct location.

The scatter/gather method can provide some increased efficiencies over indirect addressing, especially when multiple operations are being performed on the same data, but both methods suffer from the same basic problem described above - they must fetch specific data elements from an array of data that is not sequentially ordered. This problem, and the impact on overall computer system performance, is discussed in greater detail below.

It should be further noted that the indirect addressing code sample provided above is simply an example of a current software method used in computer systems without the system described herein. As described below, the described system provides a method for resolving the basic problem experienced by both methods and, as such, the system can be used in conjunction with both methods. Because of its simplicity, indirect addressing will be used as an example throughout this document.

Accessing irregular data in large arrays affects the system performance of not just scientific and engineering applications, but all other computer applications as well. The basic problem is a cache miss.

Standard computer architectures employ several techniques to speed up memory access thereby improving overall system performance. One of the techniques employed is cache memory. Depending on the processor architecture there may be one, two or even three levels of high-speed cache between the processor and main memory.

The size of these caches in the most recent processor architectures typically range from tens to hundreds of kilobytes (KB) for L1 cache, 1-9 megabytes (MB) for L2 cache, and up to tens of MB for L3 cache (if present). The 'closer' the cache is to the processor (L1 being the closest), the faster its data are accessed for processing. This high-speed access to data can have a dramatic impact on overall performance. Unfortunately, cache memory is expensive, takes up precious real estate on a processor chip (or board) and can generate significant heat so the total amount available is always limited by design constraints.

Given the limited amount of cache available, the challenge is to have the correct data waiting for the processor in cache. A cache miss occurs when the required data are not in cache and the processor must wait for the data to be retrieved from main memory.

In order to ensure that the correct data are waiting for the processor in cache, standard memory management units will pre-fetch data from main memory and place that data into cache. Based on the assumptions of sequential and spatial locality in data, standard memory management units fetch data in sequential blocks based on the last data point requested by the processor. Normally this will provide a high-degree of cache hits, but in the case of sparse data, it causes just the opposite - cache misses.

The effect of a cache miss is a slowdown in processor throughput, and the effect of multiple cache misses on overall system performance can be dramatic. This decrease in performance comes from the cumulative effects of three different issues.

The first and most basic issue is memory bandwidth - i.e. the speed at which data are read from cache versus main memory.

Although there are numerous different computer architectures, each with its own cache configuration, the basic conclusion is still the same - cache data access is at least 3-5 times faster than main memory data access and in some cases up to 10 times faster.

The second issue is the efficiency with which data are transferred from main memory into cache and its effect on overall memory bandwidth. In this type of operation, data are transferred from main memory into cache in blocks. These blocks, typically referred to as the "cache line," can vary in size depending on the processor architecture. A typical cache line is 128 bytes and is assumed in this example.

Because of the irregularity of the data in the sparse matrix, there will typically be only one valid data point in any given block transfer. Since a real, double-precision data element takes only 8 bytes of memory, the memory management unit is feeding 120 bytes of useless data into the processor cache for every read operation, further reducing the efficiency of the processor cache. In the worst-case scenario, this would effectively reduce the memory data bus bandwidth by a factor of eight.

The third issue is the additional overhead penalty that arises when random data reads are performed as opposed to sequential data reads. This additional overhead, know as memory latency, is necessary to prepare the memory system for a read operation from a new section of the memory. Its value depends on the processor, the chipset and the type of memory used.

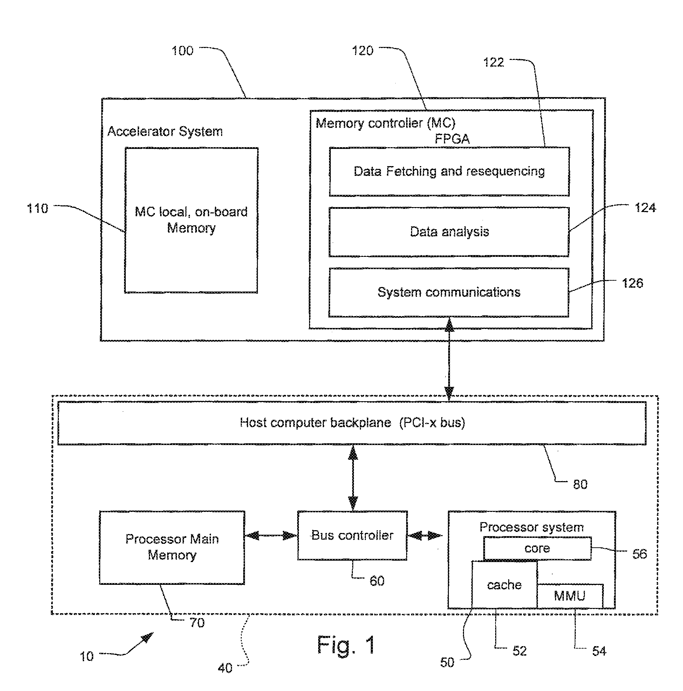

Fig. 1 shows a computer system 10 with an accelerator system 100, which has been constructed according to the principles of the present invention.

In the illustrated example, the computer system 10 is a conventional PC compatible or workstation system that utilizes a processor system including one or more central processing units (CPUs) built by Intel Corporation or Advanced Micro Devices, Inc. (AMD). Specifically, the computer system 10 comprises a motherboard 40 that contains one or more slots for receiving the CPU's of the processor system 50. As is typical, each of these central processing units has a corresponding cache system 52 and a memory management unit 54.

The cache system 52 usually includes one or more hierarchical layers of cache. In a typical configuration, the cache system 52 comprises a high speed L1 cache and a larger, but slower L2 cache. In other embodiments, the cache has an additional L3 cache that is larger yet, but slower. L1 and L2 cache are usually built into the processor chip itself. L3 cache is typically external to the processor chip but on the mother board.

The memory management unit (MMU) 54 of the processor system 50 manages the access of the data and instructions by the processor system's compute core 56. The MMU controls the movement of data and instructions from the system's main memory 70 into the cache system 52. The MMU is located in different places depending on the specific architecture used. In AMD CPU's the MMU is contained within the processor chip. In the case of Intel CPU's, the MMU is located in the chip that controls memory access.

A bus controller system 60 controls or arbitrates communications between the processor system 50 and the processor's main memory 70. It typically also arbitrates access to a lower speed communications channel such as the host computer backplane 80.

In a current embodiment, the backplane 80 is based on a commodity personal computer technology. Specifically it is a peripheral component interconnect (PCI) type bus. Preferably, it is a PCI-X or PCI Express (PCI-e) bus that provides a high speed link between processor system 50 and the accelerator system 100.

In the preferred embodiment, the accelerator system 100 communicates with the processor system 50 and the processor main memory 70 via the host computer backplane 80. In one example, it is a card that connects into the standard PCI slot.

In alternative embodiment, the motherboard 40 has slots for multiple CPU's and the accelerator system 100 is plugged into one of these slots with the processor system's CPU(s) being installed in one or more of the other slots. Specifically, the system 100 is installed in an open CPU slot on a multiprocessor computer system- specifically plugging into an open Opteron CPU slot, for example. This gives the accelerator system direct, high-speed access to both system memory and the CPU across the HyperTransport bus.

The accelerator system 100 generally comprises local or onboard memory 110 and a memory controller/data processor 120. In one embodiment, this memory controller/processor 120 is implemented as one or more field programmable gate array (FPGA) chips.

The memory controller/processor 120 has a number of functional components. A data communications subsystem 126 controls communication between the memory controller 120 and the system's backplane 80. The memory controller further comprises a data fetching and re-sequencing subsystem 122. This handles the access of the data calls from the processor system 50 and locates and then fetches the data from the local onboard memory 110. In one embodiment, the memory controller/processor 120 further includes a data analysis processing subsystem 124 that performs operations on this fetched data and provides the results of those operations back to the processor system 50.

The data fetching and re-sequencing subsystem 122 serves to eliminate cache misses due to the irregular structure of sparse data. To perform this function, it fetches individual data elements from the vector data based on the column indices array, reorders the data and loads the reordered data into main memory in advance of each calculation, allowing the standard MMU 54 to fetch dense, sequential data.

In operation, the accelerator system 100 is a separate processor that pre-fetches data elements from the data arrays stored in the local memory 110 of the accelerator 100. The memory controller 120 operates independently from, but simultaneously with, the processor system 50, which is performing the actual calculations in most embodiments, and the MMU 54 which is transferring data from processor main memory 70 into the processor cache 52. However, in an alternative embodiment, the memory controller further includes the data analysis processing subsystem 124 that functions as a coprocessor for the processor system to execute some or all of the operations performed on the data.

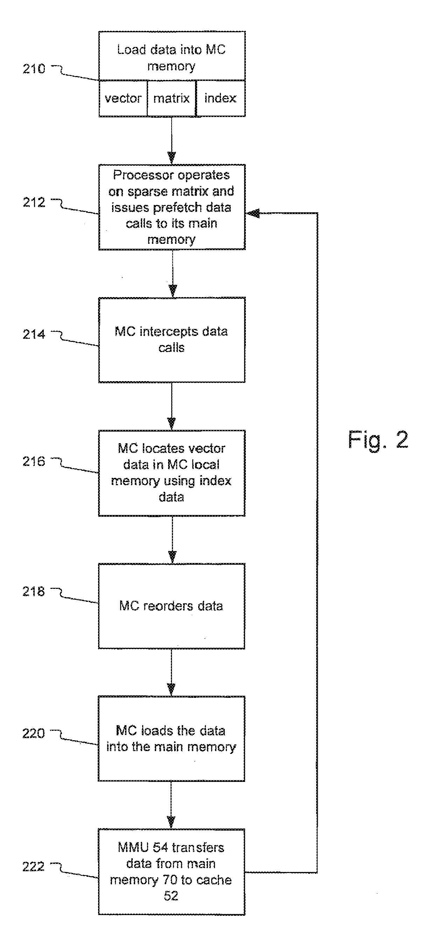

Fig. 2 is a flow diagram illustrating the operation of the memory controller 120 of the accelerator system 100 in the context of the computer system 10.

Specifically, the memory controller 120 performs an initialization step 210 in which it loads data typically from the main memory 70 of the processor system into the accelerator's local memory 110. In the typical embodiment, these data include matrix data and vector data. The matrix data are sparse matrices that have been converted into "dense" matrices using CRS, for example. The controller 120 also loads into the local accelerator memory 110 the index or index data that describe the location of data in the matrix and vector arrays.

Then in step 212, the processor begins operation on the sparse matrix and issues pre-fetch data calls typically directed to its main memory 70 or possibly directly to the accelerator system 100. At the beginning of an analysis run, the processor system 50 requests the first subset of sparse data elements from the memory controller 120 and waits for the memory controller 120 to provide that data. On subsequent iterations, however, the pipeline nature of the pre-fetch instructions from the processor system 50 enables the processor system 50 to have the next required data ready for consumption in the core 56 to be present in its cache system 52 when it is required.

The memory controller 120 intercepts the data calls from the processor system 50 to the processor main memory 70 in step 214. In other embodiments, instructions to the processor system cause the processor system to request data directly from the accelerator system 100.

Then in step 216, the memory controller 120 locates the requested vector data in the local memory 110. This is performed using the index data that are also stored in the local onboard memory 110. The memory controller locates and accesses the data and then reorders the data in step 218. In effect, the act of fetching specific, individual data elements by default "reorders" the data.

Finally, the memory controller in step 220 loads the data into the processor's main memory 70. In one implementation, this is a direct memory access (DMA) write operation. From there, the memory management unit 54 of the processor system 50 will load the data into the cache system 52 of the processor system 50, in step 222, where it will then move into the processor core and operations will be performed on it.

Looping back to step 212, once the memory controller 120 provides the first subset of data elements, the processor system 50 proactively requests, issues a pre-fetch for, the next subset of the vector data. At that point the main processor system begins the calculations using the first subset of data while the accelerator system 100 simultaneously pre-fetches the next subset of data elements. By the time the processor system 50 has finished with the calculations on the first subset, the next subset of data elements has been prepared by the accelerator system, (reordered into a dense set of sequentially ordered elements), transferred to main memory 70 and further transferred by the MMU 54 from main memory 70 to processor cache 52 and is waiting to be read by the processor system 50. From this point on, each time the main CPU reads dense, sequential data from its cache, it issues a request to the memory controller 120 for the next subset of data elements so that the memory controller 120 works in parallel to assure that the correct data are always ready and waiting for the main CPU. In a best-case scenario, the acceleratory system 100 reduces data cache misses to a negligible amount, thus providing a significant performance boost to overall system performance.

To better understand how the accelerator system 100 interacts with the memory management unit 54 and processor system core 56, it is helpful to look at the sequence and timing of the various operations involved.

Performance analysis

The memory controller improves the performance of the processing system's memory subsystem thereby making the whole system more efficient. To determine the amount of improvement possible from use of the memory controller, we need to look at the interaction of the three main subsystems involved - the central processing unit (CPU), the system's standard memory management unit (MMU) 54 and the accelerator system 100.

In order to construct a view of what the accelerator system 100 does and understand its impact on overall performance, it is helpful to take a specific type of operation and analyze the functions of the memory subsystem both without and with an accelerator system involved. By comparing the peak performance possible without and with an accelerator system, a formula can be derived for estimating the performance impact of the accelerator system 100 for that type of operation. In the example below we will analyze a sparse matrix-vector product (MVP).

The multiplication of a sparse matrix by a dense vector can be defined as follows:

$$Y[i] = Y[i] + [W[i,j] * X[C[i,j]]]$$

where W is the sparse matrix, X is the dense vector, C is the column index for dense vector X and Y is the array in which the results are stored.

The accelerator system 100 functions basically as an I/O device, directly affecting the performance of memory operations. While it does impact the efficiency of the processing system by reducing wait states, it has no direct affect on the time required to perform a calculation, in some embodiments. As such, its impact on overall performance can be measured by its impact on memory operations. To this end, we will define a formula that can express the impact of the accelerator system 100 on memory system throughput, or effective bandwidth.

Note: This method of calculating performance improvement is valid up to the point that memory operations for a particular calculation equal the time required for the calculation itself. Should memory operations become faster than the calculation itself the additional performance improvement would have no further impact on overall performance since the calculation would now be the gating factor.

From a simplistic perspective, memory operations can be broken down into read and write operations. In this example, for each MVP calculation that the processing system performs, the standard MMU must read, or fetch, three data elements: W[i,j], C[i,j] and X[C[i,j]]. For this example let us assume the following:

W[i,j] is a 64-bit double precision data type

C[i,j] is a 32-bit integer data type

X[C[i,j]] is a 64-bit double precision data type

The accelerator system 100 improves memory system performance by optimizing the read operations - specifically reading X[C[i,j]]. Writing the results of the calculation back into main memory will be the same with or without the accelerator system 100, so those operations can be ignored for the purposes of this calculation.

One additional characteristic necessary to analyze memory system performance is the main memory bandwidth:

M = main system memory bandwidth in Mega Words Per Second (MWPS)

Note: One word = 64 bits. Based on the data types listed above, the concept of memory "words" is used throughout this document to simplify calculations.

If we assume an ideal situation where vector X is small enough to fit entirely into processor cache, then the peak performance for these data fetching (read) operations can be expressed as:

$$PP = \frac{M}{(W_f = 1.0) + (C_f = 0.5) + (X_f = 1.0)} = \frac{M}{2.5}$$

where $W_f$, $C_f$ and $X_f$ are the number of 64-bit memory words that must be fetched for each calculation. Note, while computer memory management units do not fetch individual data elements one at a time, for the purposes of comparing operations both without and with the accelerator system 100, this expression represents an idealized view of the speed at which data can be fed into the processor cache for an MVP calculation.

Of course the assumption that vector $X$ will fit entirely into processor cache is unrealistic. By definition, sparse matrices are very large, irregular structures. As such, neither $W$ nor $X$ will usually fit wholly into the processor cache, but there is a significant difference in how these elements are retrieved from memory.

$W$ is a sparse matrix that has been compressed into dense format (zero-value elements have been removed) and stored row by row in memory. The elements of matrix $W$ are accessed sequentially - fetched row by row. On the other hand, despite the fact that vector $X$ is dense, elements of the vector are retrieved in a non-sequential fashion. Depending on the nature of the original data, those elements will be distributed throughout the array in a very irregular fashion and this is what creates the basic problem for standard memory controllers.

Modem processors and their associated memory management units manage the caches by pre-fetching contiguous blocks of data as opposed to individual words or bytes. This block is referred to as the "cache line" and the size of the cache line can vary between different processor architectures. In our test case we will use a Pentium IV processor which has a 128 byte cache line (128 bytes = 1024 bits = sixteen 64-bit words). That means that every time a single element of $W$ or $X$ is fetched, 15 neighboring elements are simultaneously retrieved into cache.

Since $W$ is read from memory row by row in a sequential manner, fetching a block of data into cache works well. In other words, there is a high probability that the 15 neighboring elements of $W$ will be used in subsequent calculations before they are overwritten in cache by another memory operation.

However, the same is not true for vector $X$. As the structure of the data becomes increasingly irregular (more sparse), the chance of the 15 additional elements of $X$ being used before they are overwritten by another memory operation diminishes accordingly. This process results in unused data being fetched on every memory operation, which reduces the efficiency of the processor cache and in effect reduces the overall memory data bus bandwidth.

To model this effect on peak performance of the memory subsystem, denote $K$ as the number of unused elements fetched with each element of dense vector X. K=0 is the ideal case in which all 16 pre-fetched elements of $X$ are used. This case is possible for dense matrices with sequentially ordered data. For K=15, only one element of $X$ is used out of the entire cache line (the one element that was intentionally fetched). $K$ changes dynamically during code execution and is dependent on the structure of *C[i,j]* and the cache protocol being used.

Using this concept, we can define the peak memory performance for a cache-oriented memory system as:

$$CP = \frac{M}{W_f + C_f + X_f + K} = \frac{M}{2.5 + K}$$

where the coefficients are defined as:

$W_f$ = fetching $W[ij]$ = 1.0

$X_f$ = fetching $X[C[i,j]]$ = 1.0

$C_f$ = fetching $C[i,j]$ = 0.5

$K$ = number of unused elements fetched with each element of $X$

The basic purpose of the accelerator system 100 is to eliminate cache misses due to the irregular structure of vector $X$. To perform this function, the memory controller 120 will load the data for matrix $W$, vector $X$ and the column indices array $C$ into local memory 110 at the beginning of the MVP operation. From there on, the memory controller 120 will load reordered $X[C[i,j]]$ data back into main memory 70 in advance of each calculation allowing the standard memory management unit 54 to fetch dense, sequential data for vector $X$ thereby dramatically reducing cache misses and improving system performance.

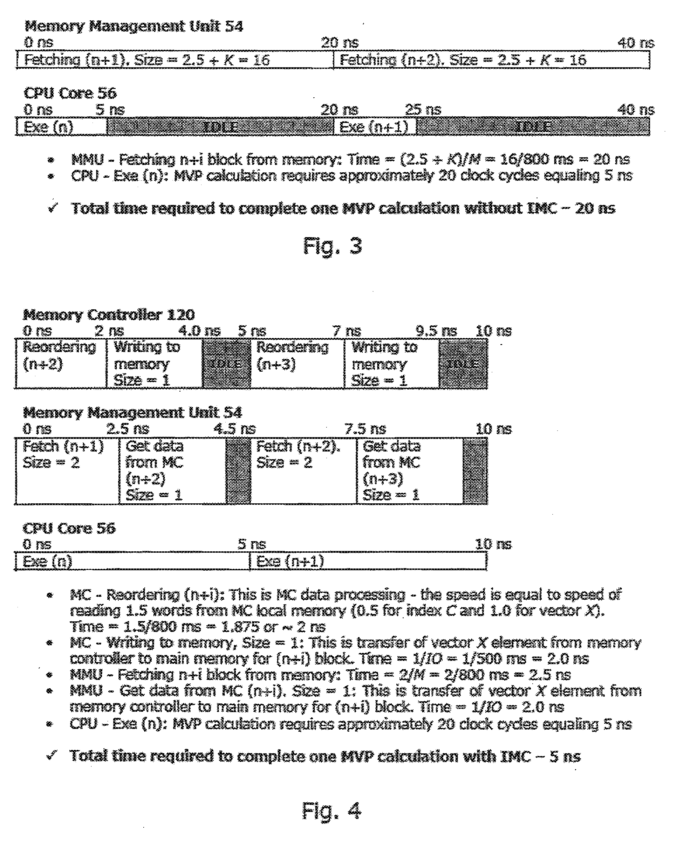

Fig 3 and 4 depict the flow of data through the system both without and with an accelerator system 100. These figures are not intended to provide a detailed analysis of the timing of individual operations, but are intended as a tool to help in conceptualizing the relationship between the operations of the accelerator system 100, the MMU 54 and the CPU core 56.

In order to assign times to these various operations, the following assumptions were used:

Processor clock frequency - 4 GHz

M = 800 Mega Words Per Second (MWPS - 1 word = 64 bits)

IO = 500 MWPS (assumes PCI-e x16 with 20% overhead)

K= 13.5

Size of data block corresponds to one point (one row element in matrix)

As shown in Fig. 3, in a conventional system, the memory management unit 54 functions in a conventional manner to provide the next data element to the CPU. However, most of the CPU time is spent idling waiting for the data to traverse the data subsystem from the main memory 70 to the cache system 52.

As shown in Fig. 4, when present, the accelerator system 100 works ahead of the MMU 54 to ensure that the data are present in main memory and densely ordered. This avoids idling of the CPU 50.

In order to estimate the impact of the accelerator system 100 on overall performance, we must determine the impact the accelerator system 100 has on memory operations - specifically fetching the values of W, C and $X$. One additional variable that must be defined is the speed with which the memory controller 100 can write data back into main memory, or its input/output speed:

$IO$ = memory controller 100 input/output interface bandwidth in MWPS

Building on the concepts developed above, we can define a formula for peak memory performance for a system using the accelerator system 100. With an accelerator, three memory operations must be performed for each calculation. First, the accelerator must write one element of vector $X$ from its local memory 110 to the processor main memory 70. Secondly, the MMU 54 must read two elements (one of matrix $W$ and one of vector $X$) from main memory 70 into cache 52. In this case the MMU does not have to read a value of index C given that the accelerator system is performing the indexing function and providing the reordered values of $X$.

Given the above, the number of memory operations is always three. However, the time required to complete accelerator's write operation will depend on the speed ($IO$) with which the accelerator system 100 can write its data into processor main memory 70. In addition, it is important to note that the accelerator system 100 can perform its operations asynchronously with those of the MMU 54.

Based on these assumptions, a formula for peak memory performance for a system with an accelerator system 100 can be expressed as:

$$MCP = \frac{M}{\max\left(3.0; M\middle/ IO\right)}$$

where the denominator is defined as the maximum (larger) of either 3.0 (the required number of memory operations) or the time required for the accelerator system 100 to write its data to main memory 70, and the coefficients are defined as:

$IO$ = writing reordered $X[C[i,j]]$ from memory controller 100 into main memory

$M$ = main memory bandwidth in MWPS (assuming that $M>IO$)

Finally, based on the formula for peak memory performance for systems with an accelerator system 100 *(MCP)* and systems without a accelerator system 100 *(CP),* we can define a formula for the potential performance impact of the accelerator system 100;

$$V = \frac{MCP}{CP} = \frac{2.5 + K}{\max\left(3.0; M/IO\right)}$$

Table 1 below shows the value of $V$ for various values of $K$ based on the following assumptions:

Assume that the memory controller 100 is using a PCI Express (PCIe) x16 interface. PCIe bi-directional bandwidth is 5 Gbits/sec encoded or 4Gbps decoded. Therefore an x16 interface (16 lanes in each direction) provides a maximum write speed (bandwidth) of 4GB/sec or 500 MWPS (in each direction): $IO = 500$

Assume a high-end system with a 1066MHz front side bus and dual channel, 533HMz DDR2 memory which provides a memory system bandwidth of 1066 MWPS: $M = 1066$. In this case $M/IO = 1066/500 = 2.132 < 3$. In the case of most current system that have an $M$ of less than 1066 MWPS, the M/IO relationship will always be less than 3.0 when using a PCIe x16 interface. Therefore, in these cases, the denominator for $V$ will be 3.0.

**Table 1**

| $K$ | $V$ ($M$=1066) |
|---|---|
| 0 | 0.83 |
| 2 | 1.5 |
| 4 | 2.166 |
| 6 | 2.833 |
| 8 | 3.5 |
| 10 | 4.166 |
| 12 | 4.833 |
| 14 | 5.5 |
| 15 | 5.833 |

As expected, Table 1 shows that for dense, sequential data ($K$=0) the accelerator system 100 provides no acceleration and in fact, because of I/O overhead, decreases overall performance. However, for sparse data (mid to high values of $K$), the accelerator system 100 can provide greater than 5x increase in performance depending on both main memory and I/O bandwidth.

While this invention has been particularly shown and described with references to preferred embodiments thereof, it will be understood by those skilled in the art that various changes in form and details may be made therein without departing from the scope of the invention encompassed by the appended claims.

**Claims**

1. A method for providing data to a processor system using a memory controller, the method comprising:

the memory controller receiving data calls from the processor system;
the memory controller locating data corresponding to the data calls;
the memory controller accessing and reordering the data;
the memory controller passing the reordered data to the processor system; and
the processor system operating on the reordered data.

2. A method as claimed in claim 1, further comprising a initialization step in which the memory controller loads the data, being matrix array and/or vector array data, and an index for the data from main memory into local memory of the memory controller, the step of locating the data comprising locating the data in the local memory.

3. A method as claimed in claim 1, wherein in the memory calls are pre-fetch data requests generated by the processor system.

4. A method as claimed in claim 1, wherein the step of locating the data comprises accessing the data based on an index that indicates a location of the data.

5. A method as claimed in claim 4, wherein the data and the index are stored locally in local memory of the memory controller.

6. A method as claimed in claim 4, wherein the data are matrix and/or vector data used in mathematical operations between the vector data and a sparse matrix.

7. A method as claimed in claim 1, wherein the step of accessing and reordering the data comprises re-sequencing the data to be retrieved from main memory of the processor system.

8. A method as claimed in claim 1, wherein the step of accessing and reordering the data comprises formatting the data to be retrieved from rows of a cache memory of the processing system by changing spatial positions of the data in memory and resequencing the data to be contiguous.

9. A method as claimed in claim 1, wherein the step of the memory controller passing the data to the processor system comprises:

loading the data into main memory of the processor system; and
the processor system loading the data from the main memory into a processor cache.

10. A method as claimed in claim 1, wherein the processor system is a central processing unit of computer system in which the memory controller is installed.

11. A method as claimed in claim 1, further comprising the performing of operations on the data before passing the data to the processor system.

12. An accelerator system for a computer, the accelerator system comprising:

local memory; and
a memory controller that receives data calls from a processor system, locates data corresponding to the data calls in the local memory, accesses and reorders the data, and passes the reordered data to a processor system, which then operates on the reordered data.

13. An accelerator system as claimed in claim 12, wherein the memory controller loads the data, being matrix array and/or vector array data, and an index for the data from main memory of the computer into the local memory.

14. An accelerator system as claimed in claim 12, wherein in the memory calls are pre-fetch data requests generated by the processor system.

15. An accelerator system as claimed in claim 12, wherein the memory controller accesses the data based on an index that indicates a location of the data.

16. An accelerator system as claimed in claim 15, wherein the data and the index are stored locally in local memory of the accelerator system.

17. An accelerator system as claimed in claim 15, wherein the data are matrix and/or vector data used in mathematical operations between the vector data and a sparse matrix.

18. An accelerator system as claimed in claim 12, wherein the memory controller re-sequences the data to be retrieved from main memory of the processor system.

19. An accelerator system as claimed in claim 12, wherein the memory controller re-sequences the data to be retrieved from rows of a cache memory of the processing system by changing spatial positions of the data in memory and re-sequencing the data to be contiguous.

20. An accelerator system as claimed in claim 12, wherein the memory controller loads the reordered data into main memory of the processing system of the computer, from which the reordered data are loaded into a cache of the processing system.

21. An accelerator system as claimed in claim 12, wherein the processor system is a central processing unit of the computer in which the memory controller is installed.

22. An accelerator system as claimed in claim 12, further comprising a processing subsystem in the accelerator system for performing operations on the data before passing the data to the processor system.

23. A method for interfacing an accelerator system to a multiprocessor computer system, the method comprising:

installing the accelerator system into a central processing unit slot in a computer system that has slots for multiple central processing units;
installing a central processing unit in another one of the slots;
the accelerator system directly accessing the central processing unit and memory of the computer system via its slot.

24. A method for interfacing an accelerator system as claimed in claim 23, wherein the slots are Operton compatible slots.

100 —⌐          120 —⌐          122 —⌐

```
┌─────────────────────────────────────────────────────────────────────┐
│                                ┌───────────────────────────────────┐ │
│  Accelerator System            │  Memory controller (MC)           │ │
│                                │           FPGA                    │ │
│  ┌──────────────────┐          │  ┌─────────────────────────────┐  │ │
│  │                  │          │  │ Data Fetching and resequencing│ │ │
│  │                  │          │  └─────────────────────────────┘  │ │
│  │  MC local, on-board│        │  ┌─────────────────────────────┐  │ │──124
│  │     Memory       │          │  │       Data analysis         │  │ │
│  │                  │          │  └─────────────────────────────┘  │ │
│  │                  │          │  ┌─────────────────────────────┐  │ │──126
│  │                  │          │  │    System communications    │  │ │
│  └──────────────────┘          │  └─────────────────────────────┘  │ │
│                                └───────────────────────────────────┘ │
└─────────────────────────────────────────────────────────────────────┘
```

110 —

```
┌ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ┐
│  ┌─────────────────────────────────────────────────────────────┐  │
│  │         Host computer backplane  (PCI-x bus)                 │  │
│  └─────────────────────────────────────────────────────────────┘  │
│                                                           ⌐ 80     │
│                                                                    │
│  ┌──────────────┐     ┌──────────────┐     ┌──────────────────┐   │
│  │ Processor Main│◄──►│ Bus controller│◄──►│  Processor system │   │
│  │    Memory    │     │              │     │  ┌─────────────┐  │   │──56
│  │              │     └──────────────┘     │  │    core     │  │   │
│  │              │          └ 60            │  └─────────────┘  │   │
│  │              │                          │ ┌──────┐┌──────┐ │   │
│  └──────────────┘                          │ │cache ││ MMU  │ │   │
│         └ 70                               │ └──────┘└──────┘ │   │
│                                            └──────────────────┘   │
└ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ┘
```

10 —          40          50 ⌐   └ 52      └ 54

## Fig. 1

210 ⌐  Load data into MC
         memory

         | vector | matrix | index |

212 ⌐  Processor operates
         on sparse matrix and
         issues prefetch data
         calls to its main
         memory

214 ⌐  MC intercepts data
         calls

216 ⌐  MC locates vector
         data in MC local
         memory using index
         data

218 ⌐  MC reorders data

220 ⌐  MC loads the data
         into the main memory

222 ⌐  MMU 54 transfers
         data from main
         memory 70 to cache
         52

Fig. 2

**Memory Management Unit 54**

| 0 ns | 20 ns | 40 ns |
|---|---|---|
| Fetching (n+1). Size = 2.5 + $K$ = 16 | Fetching (n+2). Size = 2.5 + $K$ = 16 | |

**CPU Core 56**

| 0 ns | 5 ns | 20 ns | 25 ns | 40 ns |
|---|---|---|---|---|
| Exe (n) | IDLE | Exe (n+1) | IDLE | |

- MMU - Fetching n+i block from memory: Time = $(2.5 + K)/M$ = 16/800 ms = 20 ns
- CPU - Exe (n): MVP calculation requires approximately 20 clock cycles equaling 5 ns

✓ **Total time required to complete one MVP calculation without IMC ~ 20 ns**

## Fig. 3

**Memory Controller 120**

| 0 ns | 2 ns | 4.0 ns | 5 ns | 7 ns | 9.5 ns | 10 ns |
|---|---|---|---|---|---|---|
| Reordering (n+2) | Writing to memory Size = 1 | IDLE | Reordering (n+3) | Writing to memory Size = 1 | IDLE | |

**Memory Management Unit 54**

| 0 ns | 2.5 ns | 4.5 ns | 7.5 ns | 10 ns |
|---|---|---|---|---|
| Fetch (n+1) Size = 2 | Get data from MC (n+2) Size = 1 | | Fetch (n+2). Size = 2 | Get data from MC (n+3) Size = 1 | |

**CPU Core 56**

| 0 ns | 5 ns | 10 ns |
|---|---|---|
| Exe (n) | Exe (n+1) | |

- MC - Reordering (n+i): This is MC data processing - the speed is equal to speed of reading 1.5 words from MC local memory (0.5 for index $C$ and 1.0 for vector $X$). Time = 1.5/800 ms = 1.875 or ~ 2 ns
- MC - Writing to memory, Size = 1: This is transfer of vector $X$ element from memory controller to main memory for (n+i) block. Time = 1/IO = 1/500 ms = 2.0 ns
- MMU - Fetching n+i block from memory: Time = 2/M = 2/800 ms = 2.5 ns
- MMU - Get data from MC (n+i). Size = 1: This is transfer of vector $X$ element from memory controller to main memory for (n+i) block. Time = 1/IO = 2.0 ns
- CPU - Exe (n): MVP calculation requires approximately 20 clock cycles equaling 5 ns

✓ **Total time required to complete one MVP calculation with IMC ~ 5 ns**

## Fig. 4

14